# EUROPÄISCHE PATENTANMELDUNG

(11) **EP 2 947 618 A1**
(43) Veröffentlichungstag der Anmeldung: **25.11.2015**
(21) Anmeldenummer: 15168767.0
(22) Anmeldetag: 21.05.2015
(51) Int. Cl.: G06Q 20/40

(54) **SYSTEM UND VERFAHREN ZUR SICHEREN ABWICKLUNG VON ONLINE-BANKANGELEGENHEITEN**

(30) Priorität: 21.05.2014 DE 102014007360
(71) Anmelder: CBT Cloud Biometrics Technology GmbH, 82031 Grünwald (DE)
(72) Erfinder: Bartmann, Dieter, 85435 Erding (DE)
(74) Vertreter: Lang, Christian

(57) **Zusammenfassung**

Die vorliegende Erfindung betrifft ein System sowie ein Verfahren zur sicheren Abwicklung von Online-Bankangelegenheiten, insbesondere für einen sicheren Zugang zu einem Online-Kundenbankkonto, zur Änderung der Einstellungen eines solchen Online-Kundenbankkontos und/oder zur sicheren Ausführung von Online-Banktransaktionen. Das System sowie das Verfahren gemäß der vorliegenden Erfindung eignen sich als Ersatz oder Ergänzung zu herkömmlichen Zugangs- und Ausführungskontrollen mittels Passwörtern und dienen somit der Erhöhung der Sicherheit bei der Durchführung von Online-Bankangelegenheiten.

Dazu wird ein Veranlasser vor Ausführung einer durch diesen veranlassten Bankangelegenheit zur Abgabe einer Tippprobe aufgefordert wird, eine von dem Veranlasser abgegebene Tippprobe in Form eines sein individuelles Tippverhalten enthaltenden alphanumerischen Strings analysiert und mit einem dem Kontozugangsberechtigten zugeordneten persönlichen Tippprofil verglichen und bei weitgehender Übereinstimmung der Tippprobe des Veranlassers mit dem Tippprofil des Kontozugangsberechtigten die Abwicklung der veranlassten Bankangelegenheit autorisiert.

## Beschreibung

### GEBIET DER ERFINDUNG

Die vorliegende Erfindung betrifft ein System sowie ein Verfahren zur sicheren Abwicklung von Online-Handlungen, insbesondere Online-Bankangelegenheiten, vorzugsweise für einen sicheren Zugang zu einem Online- Kundenbankkonto, zur Änderung der Einstellungen eines solchen Online-Kundenbankkontos und/oder zur sicheren Ausführung von Online-Banktransaktionen. Das System sowie das Verfahren gemäß der vorliegenden Erfindung eignen sich als Ersatz oder Ergänzung zu herkömmlichen Zugangs- und Ausführungskontrollen mittels Passwörtern und dienen somit der Erhöhung der Sicherheit bei der Durchführung von Online-Handlungen, wie Transaktionen, Austausch von Dokumenten und insbesondere Online-Bankangelegenheiten.

### STAND DER TECHNIK

Zur Durchführung von Online-Bankangelegenheiten werden derzeit verschiedene Schutzmechanismen auf Basis von PIN-TAN-Verfahren mit jeweils unterschiedlichen Sicherheitsniveaus eingesetzt. Dabei soll ein PIN einen sicheren Zugang zu einem Online-Bankkonto gewährleisten und eine TAN eine bestimmte Einstellungsänderung des Online-Bankkundenkontos oder einer Online-Banktransaktion sichern.

Es besteht jedoch das Problem, dass Kundencomputer, wie beispielsweise PCs, Laptops oder internetfähige Handys oftmals nicht ausreichend vor Hackerangriffen geschützt sind. Da die Bank keinen Einfluss auf den jeweiligen Kundencomputer hat, fällt es der Bank schwer, angemessene Sicherheitsstandards beim Onlinebanking zur Verfügung zu stellen. Es besteht somit die Gefahr, das sich Hacker Zugriff auf die PIN beschaffen und das Online-Kundenbankkonto kontinuierlich ausspähen. Auch die TANs können durch die Hacker abgegriffen werden und missbräuchlich verwendet werden. Zudem haben herkömmliche TAN-Listen den Nachteil, dass sie vom Kunden mitgeführt werden müssen und damit die Gefahr des Verlustes sehr hoch ist.

Um die Sicherheit bei Online-Bankangelegenheiten zu erhöhen, wurden in den letzten Jahren mTANs und smartTANs eingeführt. Für die Nutzung von mTANs sowie smartTANs ist jedoch ein zusätzliches Gerät wie beispielsweise ein Mobiltelefon für mTANs und ein Kartenlesegerät für smartTANs von Nöten, was zu einem erhöhten Aufwand und Unannehmlichkeiten für den Benutzer führt.

### OFFENBARUNG DER ERFINDUNG

### AUFGABE DER ERFINDUNG

Ausgehend vom Stand der Technik ist es somit Aufgabe der vorliegenden Erfindung, ein System sowie ein Verfahren zur Verfügung zu stellen, die eine sichere Abwicklung von Online-Handlungen, insbesondere Online-Bankangelegenheiten ermöglichen und die Gefahr der Manipulation ohne Einsatz zusätzlicher Geräte wie beispielsweise Sensoren (Lesegeräte) beseitigen.

### TECHNISCHE LÖSUNG

Die oben benannten Aufgaben werden durch das System gemäß Anspruch 1 sowie das Verfahren gemäß Anspruch 6 gelöst. Vorteilhafte Weiterbildungen der vorliegenden Erfindung sind Gegenstand der jeweiligen abhängigen Ansprüche.

Im Folgenden werden unter Online-Handlungen sämtliche elektronischen Handlungen, die über Computernetzwerke ausgeführt werden können, verstanden, also beispielsweise die Übermittlung von Nachrichten, Austausch von Dokumenten, Abschluss von Verträgen, Durchführen von Transaktionen und insbesondere eben auch die Durchführung von Online-Bankangelegenheiten, wie beispielsweise Online-Überweisungen (Online-Banktransaktionen) oder Änderungen von Einstellungen eines Bankkontos. Im Nachfolgenden werden die Begriffe Online-Handlung und Online-Bankangelegenheiten synonym verwendet, so dass sie jeweils gegenseitig ausgetauscht werden können. Entsprechend werden auch andere bankbezogenen Begriff, wie z.B. Bankkunde synonym für den entsprechenden allgemeinen Begriff, wie z.B. Kunde, verwendet, ohne dass alle verallgemeinerten Begriffe im einzelnen aufgezählt werden.

Unter einem Serversystem ist somit im einfachsten Fall eine Datenverarbeitungsanlage zu verstehen, die mit einer Datenverarbeitungseinheit eines Nutzers des Systems in Verbindung steht. Im Hinblick auf Online-Bankangelegenheiten wird unter einem Serversystem ein Bankserversystem verstanden, welches mit der Datenverarbeitungseinheit eines Nutzers in Verbindung steht, um Bankgeschäfte anzubieten. Die Ausdrücke Bankserversystem und Serversystem werden nachfolgend gleichberechtigt verwendet, wobei Serversystem für eine Datenverarbeitungsanlage steht, die von einem Anbieter verwendet wird, der keine Bankgeschäfte anbietet, sondern anderweitige Online-Handlungen mit einem Nutzer einer Datenverarbeitungseinheit ermöglicht. Im Folgenden werden Serversystem und Bankserversystem synonym verwendet, so dass auch hier ein entsprechender gegenseitiger Austausch möglich ist.

Unter einem Provider ist eine technische Anlage, insbesondere eine Datenverarbeitungsanlage, zu verstehen, die bestimmte, nachfolgend beschriebene Aufgaben in dem System bzw. dem Verfahren gemäß der Erfindung übernimmt, wie beispielsweise die Speicherung von Tippproben und die zugehörigen Nutzerdaten. Der Provider kann getrennt und unabhängig von einem Serversystem, insbesondere einem Bankserversystem, zur Verfügung gestellt werden oder kann in dem Serversystem bzw. Bankserversystem integriert sein. In diesem Fall ist der Provider mit dem Anbieter, der mit einem anderen Nutzer die Online-Handlung durchführt, oder insbesondere mit einer Bank bei Online-Bankangelegenheiten identisch.

Unter einer internetfähigen Datenverarbeitungseinheit ist jede Art von Gerät zu verstehen, mit der ein Nutzer mit dem Provider und dem Serversystem über ein Netzwerk in Verbindung treten kann, wie beispielsweise PCs, Laptops, Tablets, mobile Telefone und dergleichen.

Unter einer Tastatur ist jede technische Realisierung einer Eingabemöglichkeit von alphanumerischen Zeichen, also von Zahlen, Buchstaben und Sonderzeichen, zu verstehen, also beispielsweise klassische Tastaturen mit einzelnen, den Zeichen zugeordneten Tasten, aber auch virtuelle Tastaturen oder Eingabefelder, die über Software auf berührungsempfindlichen Displays oder dergleichen dargestellt werden können.

Unter Tippprobe wird ein alphanumerischer String, also eine Anzahl von Buchstaben, Ziffern oder Sonderzeichen verstanden, die in einer charakteristischen Weise eingegeben worden sind und somit das das individuelle Tippverhalten enthalten.

Das Tippverhalten ist hierbei charakterisiert durch Merkmale, wie die Zeit zwischen der Eingabe einzelner Zeichen, die Zeiten zwischen der Eingabe bestimmter aufeinander folgender Zeichen, die Fehlerhäufigkeit bei Eingabe bestimmter Zeichen, die Druckdauer bei der Eingabe der Zeichen bzw. bestimmter Zeichen und vergleichbare Parameter, die bei der Eingabe von alphanumerischen Zeichen erfasst werden können und dem Fachmann bereits aus dem Stand der Technik bekannt sind.

Zusätzlich umfassen die Tippproben neue personentypische Tippverhaltensmerkmale, die bei der Eingabe bei Touchscreens erfasst werden können, wie beispielsweise die Größe der Berührfläche, die Form der Berührfläche, die Präzision, mit der bestimmte Touchscreen-Felder getroffen werden, die dynamische Veränderung der entsprechenden Parameter, Wischeffekte und dergleichen.

Die Größe der Berührfläche gibt beispielsweise Auskunft über die Größe der Fingerkuppe und/oder über die Druckintensität, die darüber hinaus auch fingerabhängig sein können. Unterschiedliche Formen der Berührfläche können sich aus unterschiedlichen Handhaltungen gegenüber einem Touchscreen ergeben. Mit der Präzision des Treffens von bestimmten Tastenfeldern wird das unterschiedliche, personentypische Zielverhalten erfasst, beispielsweise ob Tastenfelder systematisch etwas zu hoch oder zu weit rechts getroffen werden.

Dynamische Veränderungen der oben dargestellten Parameter, wie beispielsweise der Berührfläche, geben weiterhin Auskunft über die Art der Betätigung von Tastenfeldern, insbesondere bei der Veränderung verschiedener Parameter in Kombination, beispielsweise von Berührfläche und Berührungsdruck. Charakteristische dynamische Veränderungen der Parameter, wie beispielsweise der Berührfläche, lassen somit einen Rückschluss auf die personenbezogene Betätigung der Tastenfelder zu. So wird beispielsweise eine schräge Berührung dadurch erkannt, dass sich die Berührfläche nicht konzentrisch verbreitet, sondern in einer seitlichen Richtung.

Das erfindungsgemäße System zur sicheren Abwicklung von Online-Bankangelegenheiten durch einen Kontozugangsberechtigten, insbesondere ein Online-Kundenbankkontoinhaber, enthält ein Bankserversystem, einen Provider und mindestens eine internetfähige Datenverarbeitungseinheit, insbesondere einen Kunden-PC, einen Laptop, ein Tablet oder ein internetfähiges Mobiltelefon, die zumindest eine Tastatur und eine Anzeigeeinheit oder eine berührungsempfindliche Display aufweist. Die mindestens eine Datenverarbeitungseinheit ist über das Internet sowohl mit dem Provider als auch mit dem Bankserversystem verbunden. Der Provider zeichnet sich dadurch aus, dass auf ihm einen Vielzahl an persönlichen Tippprofilen hinterlegt ist, wobei jedem eine Vielzahl an registrierten Online-Bankkunden einschließlich dem Kontozugangsberechtigten jeweils eines der persönlichen Tipp-Profile zugeordnet ist. Die Vielzahl an registrierten Online-Bankkunden ist als die Anzahl an Online-Bankunden zu verstehen, die sich für die Verwendung des erfindungsgemäßen Systems registriert haben. Der Provider ist weiterhin so ausgeführt, dass ein Veranlasser vor Ausführung einer durch diesen veranlassten Online-Bankangelegenheit durch den Provider über die Datenverarbeitungseinheit, insbesondere über deren Anzeigeneinheit, zur Abgabe einer Tippprobe aufforderbar ist, wobei eine abgegebene Tippprobe in Form eines ein individuelles Tippverhalten des Veranlassers enthaltenden alphanumerischen Strings analysierbar ist und mit dem dem Kontozugangsberechtigten zugeordneten persönlichen Tippprofil vergleichbar ist und bei weitgehender Übereinstimmung der Tippprobe des Veranlassers mit dem Tippprofil des Kontozugangsberechtigten die Abwicklung der veranlassten Bankangelegenheit autorisierbar ist. Unter weitgehender Übereinstimmung ist dabei eine Übereinstimmung von mindestens 90 %, vorzugsweise mindestens 95 %, vorzugsweise mindestens 99 % zu verstehen.

Das erfindungsgemäße System zur sicheren Abwicklung von Online-Bankangelegenheiten macht sich die Eigenschaft zu Nutze, dass jede Person ein typisches individuelles Tippverhalten aufweist, welches sich über einen längeren Zeitraum entwickelt hat und sehr individuelle Züge trägt. Ein Angreifer bzw. Hacker hat somit zwar die Möglichkeit, die Tippprobe zu lesen, kann diese jedoch nicht reproduzierten, da er nicht in der Lage ist, das Tippverhalten des Kontozugangsberechtigten zu imitieren.

Vorteilhafterweise ist der Provider derart ausgebildet, das er dem Veranlasser einer Online-Bankangelegenheit vor Ausführung dieser über die Datenverarbeitungseinheit als Textelement, beispielsweise ein zufällig gewähltes Textelement oder ein mit der veranlassten Online-Bankangelegenheit in Beziehung stehendes Textelement, wie z.B. die in Worten zu schreibende Zahlenfolge der Kontonummer, des Betrags oder dergleichen, zur Verfügung stellt und den Veranlasser zum Abtippen dieses Textelementes auffordert. Durch Abtippen dieses Textelementes kann der Veranlasser eine Tippprobe abgeben, die die Form eines ein individuelles Tippverhalten des Veranlassers enthaltenden alphanumerischen Strings aufweist, der anschließend zur Autorisierung analysiert und verglichen wird. Da das Textelement, das der Tipprobe zugrunde liegt, bei jeder veranlassten Bankangelegenheit verändert werden kann oder automatisch unterschiedlich ist, macht es für einen Hacker auch keinen Sinn, eine Tippprobe abzufangen, da diese im weiteren Verlauf für ihn nicht hilfreich ist. Entsprechend sind replay - Angriffe mit abgefangenen oder durch manipulierte Geräte aufgezeichnete Eingaben des Nutzers nicht möglich. Mithilfe des erfindungsgemäßen Systems kann somit ein effektiver Schutz vor Angriffen auf Online-Kundenbankkonten gewährleistet werden.

Damit ist die Identifizierung und/oder Authentifizierung bzw. die Verifizierung der Identität eines Nutzers durch biometrische Daten in Form des Tippverhaltens möglich. Statt einer PIN (persönlicher Identifikationsnummer) ist sozusagen eine bioPIN mit biometrischer Identifikation über das persönliche Tippverhalten möglich. Damit muss sich der Nutzer keine PIN oder ein Passwort merken, da er über das persönliche Tippverhalten identifiziert oder autorisiert wird. Darüber hinaus gibt es jedoch zusätzlich oder alternativ die Möglichkeit, dass ein Veranlasser bei Ausführung einer Online-Handlung durch Eingabe eines zu der Online-Handlung und/oder dem Veranlasser eindeutig zuordenbaren Textelements eine Tippprobe erzeugt, welche dem Provider bereitgestellt werden kann.

Durch die Verknüpfung mit spezifischen mit der Handlung verbundenen Informationen kann beispielsweise eine Art bioTAN erzeugt werden, beispielsweise wenn bei einer OnlineÜberweisung die Empfängerkontonummer, vorzugsweise geschrieben in Worten, durch den Veranlasser eingegeben wird. Durch die Verknüpfung von biometrischer Information über das Tippverhalten und der der Online-Bankangelegenheit zugeordneten Empfängerkontonummer wird eine erhöhte Sicherheit gewährleistet.

Zusätzlich oder alternativ kann auch eine weitere Verknüpfung mit Informationen zur Person vorgenommen werden, beispielsweise wenn der Nutzer die Online-Handlung durch seine Unterschrift abschließt, also seine personenbezogene Informationen wie Name und/oder Adresse eingibt und das Tippverhalten bei der Eingabe dieser Information zur Authentifizierung bzw. Verifizierung der Identität des Unterzeichners erfasst wird. Durch die Verwendung der biometrischen Information des Tippverhaltens kann eine elektronische Unterschrift durch die Kombination von Unterschriftsinformation und Tippverhalten in gleicher Weise wie eine manuell ausgeführte Unterschrift aussagekräftig sein.

Vorteilhafterweise ist das System zur sicheren Abwicklung von Online-Bankangelegenheiten nicht auf spezielle Sensoren zum Erkennen des Veranlassers als Kontozugangsberechtigten angewiesen. Lediglich das Vorhandensein einer Tastatur sowie die Möglichkeit einer Übertragung des mit dem Tippverhalten des Veranlassers gekoppelten alphanumerischer Strings als Tippprobe an den Provider, was ohne zusätzliche Hardware realisierbar ist, müssen gegeben sein. Auf Scanner, Kameras, Mikrofone, zusätzliche Kartenlesegeräte, sonstige Sensoren oder dergleichen zur Authentifizierung und/oder Autorisierung eines Nutzers kann hingegen verzichtet werden.

Der Provider ist somit vorzugsweise derart gestaltet, dass durch ihn zur Autorisierung ein Autorisierungsticket, das vom Bankserversystem auslesbar sein kann, erstellbar ist und dem Bankserversystem insbesondere direkt oder über die Datenverarbeitungseinheit übermittelbar ist. Das Autorisierungsticket kann dabei vorzugsweise, wie oben beschrieben, an eine bestimmte, durch den Veranlasser initiierte Bankangelegenheit gebunden sein. Das Autorisierungsticket kann dabei beispielsweise basierend auf einer abgegebenen Tippprobe sowie eines individuellen Nutzerpasswortes erzeugt werden und ähnlich einer PIN zum sicheren Herstellen eines Zuganges zu einem Online-Bankkundenkonto eingesetzt werden. Alternativ kann die Tippprobe beispielsweise ein Teil einer in Worten ausgeschuebenen Empfängerkontonummer sein, sodass das durch diese Tippprobe erzeugte Autorisierungsticket als TAN zur Durchführung einer Onlinebanküberweisung einsetzbar ist, wobei das Autorisierungsticket in einem solchen Fall zusätzlich eine Tippprobe, die den Namen des Kontozugangsberechtigten enthält und als Willenserklärung dienen kann, aufweisen kann. In ähnlicher Weise kann ein auf ein bestimmtes Textelement basiertes Autorisierungsticket als TAN zur Veränderung von Einstellungen des Online-Bankkundenkontos herangezogen werden.

Der Provider kann weiterhin zur Registrierung von neuen Online-Bankkunden ausgebildet sein. Die Registrierung betrifft dabei insbesondere das Erstellen eines persönlichen Tippprofils für den neu zu registrierenden Online-Bankkunden und das anschließende Hinterlegen dieses neu erstellten persönlichen Tippprofils auf dem Provider.

Jedes der hinterlegten Tippprofile kann vorteilhafterweise bei Abgabe einer Tippprobe durch einen Veranlasser, dessen Tippprobe mit dem hinterlegten Tippprofil des Kontozugangsberechtigten weitgehend übereinstimmt, adaptiv durch den Provider angepasst werden.

Die Erzeugung bzw. die Verwendung einer so genannten BioPIN kann auch zur Realisierung eines BioPasswordAdapters Verwendung finden, der als Teil des Systems implementiert sein kann. Der BioPasswortAdapter kann eine Passwortdatei aufweisen, die eine Vielzahl von Passwörtern für verschieden Applikationen, d. h. Anwendungsprogramme, gespeichert hat. Die Passwortdatei kann sowohl bei dem Provider als auch auf der Datenverarbeitungseinheit des Nutzers gespeichert sein. Zusätzlich kann der BioPasswortAdapter ein Datenverarbeitungsprogramm umfassen, welches automatisiert für jede der Applikationen das erforderliche Passwort aus der Passwortdatei entnehmen und der Applikation bereitstellen kann. Die Passwortdatei kann durch eine BioPIN geschützt sein, sodass der Provider die Passwortdatei erst öffnet oder zur Öffnung freigibt, wenn der Provider nach Überprüfung einer Tippprobe des Nutzers feststellt, dass sich der Nutzer authentifiziert oder autorisiert hat. Dies kann beispielsweise dadurch erfolgen, dass beim Login für eine Applikation statt der Eingabe des erforderlichen Passworts der BioPasswortAdapter gestartet wird und der Provider den Nutzer bzw. Veranlasser zur Abgabe einer Tippprobe auffordert. Diese Tippprobe kann wiederum wie bei den anderen Ausführungsformen der vorliegenden Erfindung für online-Bankgeschäfte oder sonstige online - Transaktionen darin bestehen, dass der Nutzer bzw. Veranlasser entweder einen willkürlich vorgegebenen Text eintippen muss oder eine Zeichenfolge eingeben muss, die mit dem Nutzer und/oder der Transaktion in Verbindung steht, also beispielsweise seine Login - Information, seinen Namen oder sonstige Informationen zur Transaktion. Beispielsweise kann der Nutzer nach der Aktivierung des BioPasswortAdapters seinen Namen bzw. sein Login eintippen, wobei der Provider zum einen die Tippprobe nach dem Tippverhalten analysieren kann und zum anderen prüfen kann, ob die damit eingegebene Information, also der Namen oder das Login, für den Zugriff auf die Passwortdatei gespeichert ist. Nach erfolgreicher Öffnung der Passwortdatei entnimmt der BioPasswortAdapter das erforderliche Passwort und stellt es der Applikation zur Verfügung, ohne dass der Nutzer ein einziges Passwort eingeben musste.

Die vorliegende Erfindung betrifft zudem ein Verfahren zur sicheren Abwicklung von Online-Bankangelegenheiten, insbesondere ein Verfahren für einen sicheren Zugang zu einem Online-Kundenbankkonto und/oder zur sicheren Ausführung von Onlinetransaktionen durch einen Kontozugangsberechtigten. Erfindungsgemäß wird ein Veranlasser vor Ausführung einer durch diesen veranlassten Bankangelegenheit zur Abgabe einer Tippprobe aufgefordert oder der Veranlasser gibt bei der Durchführung der Online-Handlung automatisch eine Tippprobe ab. Nachdem der Veranlasser eine Tippprobe in Form eines alphanumerischer Strings, der ein individuelles Tippverhalten des Veranlassers enthält, abgegeben hat, wird dieses analysiert und mit einem dem Kontozugangsberechtigten zugeordneten persönlichen Tippprofil verglichen. Bei weitgehender Übereinstimmung der Tippprobe des Veranlassers mit dem Tippprofil des Kontozugangsberechtigten wird die Abwicklung der veranlassten Bankangelegenheit autorisiert. Unter weitgehender Übereinstimmung ist dabei eine Übereinstimmung von mindestens 90 %, vorzugsweise mindestens 95 %, vorzugsweise mindestens 99 % zu verstehen.

Mit der Aufforderung an den Veranlasser, eine Abtippprobe abzugeben, wird dem Veranlasser vorzugsweise ein zufällig gewähltes Textelement oder ein mit der veranlassten Bankangelegeneheit in Beziehung stehendes Textelement angezeigt, wobei durch Abtippen dieses über eine Tastatur die Tippprobe des Veranlasser erzeugt werden kann. Alternativ kann bei der Ausfüllung einer Überweisung oder beim Unterschreiben eines Dokuments die Eingabe von Überweisungsinformationen oder die Eingabe der Personendaten (Name, Adresse etc. = Unterschrift) mit dem Tippverhalten verknüpft werden, so dass eindeutige, schwer manipulierbare Daten (Autorisierungsticket) erzeugt werden können.

Das Verfahren wird vorteilhafterweise mit Hilfe eines Systems wie es in den vorhergehenden Abschnitten im Detail beschrieben wurde, durchgeführt. Dabei wird vorteilhafterweise, nachdem der Provider eine Anfrage auf Ausführung einer Bankangelegenheit erhalten hat, vom Provider ein Befehl an die Datenverarbeitungseinheit übermittelt, dass der Veranlasser einer Bankangelegenheit einen bestimmten Text über die Tastatur der Datenverarbeitungsanlage eingeben soll. Dieser Befehl wird vorzugsweise mittels der Anzeigeeinheit der Datenverarbeitungseinheit angezeigt. Nachfolgend gibt der Veranlasser einer Bankangelegenheit den angezeigten Text über die Tastatur ein, wobei das Tippverhalten des Veranlassers gemeinsam mit dem alphanumerischer String an den Provider übermittelt wird. Der Provider analysiert anschließend die Tippprobe des Veranlassers und vergleicht diese mit dem hinterlegten, persönlichen Tippprofil des Kontozugangsberechtigten. Im Falle einer weitgehenden Übereinstimmung der Tippprobe des Veranlassers mit dem Tippprofil des Kontozugangsberechtigten, d. h. im Falle dass der Veranlasser der tatsächliche Kontozugangsberechtigte ist, eine Autorisierung, insbesondere ein Autorisierungsticket, das der Provider anschließend direkt oder über die Datenverarbeitungseinheit an das Bankserversystem übermittelt. Der Bankserver ermöglicht anschließend vorzugsweise die Ausführung der Bankangelegenheit. Somit kann die Autorisierung durch den Provider als PIN beim Einloggen in ein Online-Kundenbankkonto oder aber als TAN bei Transaktionen oder Nutzerkonteneinstellungen eingesetzt werden. Ist der Veranlasser nicht als der Kontozugangsberechtigte erkennbar, d.h. gibt es keine ausreichende Übereinstimmung zwischen Tippprobe und Tippprofil, so wir die Autorisierung verweigert

Das vom Provider zur Autorisierung der veranlassten Bankangelegenheit erzeugte Autorisierungsticket ist vorteilhafterweise vom Bankserversystem auslesbar. Das Autorisierungsticket kann zudem oder alternativ an eine bestimmte veranlasste Bankangelegenheit gebunden sein. So kann beispielsweise das Autorisierungsticket als sogenannte biometrische PIN zum Einloggen in ein Kundenbankkonto oder als sogenannte biometrische TAN zum Durchführen einer Onlineüberweisung oder einer Änderung der Einstellung des Kundenbankkontos dienen. Dazu ist vorteilhafterweise die Art der Tippprobe auf unterschiedlichen Texten basiert. Zum Einloggen und Erzeugen der sogenannten biometrischen PIN (BioPIN) wird vorteilhafterweise als Textelement eine Reihe von Ziffern und/oder ein geschriebenes Textelement angezeigt. Der Veranlasser wird aufgefordert, die Ziffern in Worten auszuschreiben, um die PIN zum sicheren Zugang zum Kundenbankkonto zu erstellen. Bei der Erzeugung der PIN kann zudem vorgesehen sein, dass der Veranlasser ein dem Kontozugangsberechtigten zugeordnetes Passwort, das mit der bisherigen PIN vergleichbar ist eingibt.

Alternativ kann beispielsweise bei Online-Banküberweisungen der Veranlasser aufgefordert werden, die letzten Ziffern der Kontonummer des Empfängers in Worten auszuschreiben, auf Basis derer anschließend das Autorisierungsticket erstellt wird.

Die Übermittlung der Tippprobe zwischen der Datenverarbeitungseinheit und dem Provider erfolgt vorteilhafterweise derart, dass der Provider das Tippverhalten des Veranlassers, das in der Tippprobe zusammen mit den alphanumerischer String enthalten ist, erkennt.

Wie bereits oben als Variante erwähnt, kann der Provider den Veranlasser einer Online-Bankangelegenheit zusätzlich zur Abgabe einer Tippprobe zur Eingabe eines Passwortes auffordern. Diese Kombination aus herkömmlich Passwort und Autorisierung mittels Tippprobe kann zu einer weiteren Erhöhung der Sicherheit des Verfahrens beitragen.

Das erfindungsgemäße Verfahren kann vorteilhafterweise so ausgelegt sein, dass der Provider dem Veranlasser über die Anzeigeeinheit vor Freigabe zur Ausführung jeder veranlassten Bankangelegenheit mindestens zur Abgabe einer, vorzugsweise von zwei oder mehr, Tippproben auffordert. Bei einer Banktransaktion, insbesondere einer Überweisung, kann der Veranlasser einerseits dazu aufgefordert werden, ein bestimmtes Textelement, beispielsweise die letzten Ziffern der Kontonummer des Empfängers in Worten einzugeben und außerdem seinen Namen sowie gegebenenfalls seinen Sitz zur Signalisierung seiner Willenserklärung, abzugeben.

Das Tippelement, das der Tippprobe zu Grunde gelegt wird, kann beispielsweise Ziffern und/ oder Wörter enthalten, wobei zur Abgabe der Tippprobe die Ziffern vom Veranlasser vorteilhafterweise in Worten ausgeschrieben werden soll. Eine entsprechende Aufforderung wird dem Veranlasser einer Bankangelegenheit vorteilhafterweise durch die Anzeigeeinheit der Datenverarbeitungseinheit angezeigt.

Nach Erhalt einer Registrierungsanfrage durch einen neuen Online-Bankkunden wird der neu zu registrierende Online-Bankkunde vorteilhafterweise vom Provider zur Abgabe einer Tippprobe aufgefordert. Vorzugsweise wird dazu ein bestimmtes Textelement über die Anzeigeeinheit der Datenverarbeitungseinheit angezeigt, dass der neu zu registrierende Online-Bankkunde über die Tastatur der Datenverarbeitungseinheit abtippt, um eine Tippprobe zu erzeugen. Die abgegebene Tippprobe wird anschließend von der Datenverarbeitungseinheit zum Provider übermittelt, wobei die Tippprobe die Form eines alphanumerischer Strings aufweist, der das Tippverhalten des neu zu registrierenden Online-Bankkunden enthält. Der Provider erstellt anschließend aus der abgegebenen Tippprobe ein dem neu zu registrierenden Online-Bankkunden zugeordnetes Tippprofil und hinterlegt dieses. Derselbe Registrierungsprozess kann auch durchgeführt werden, wenn ein Tippprofil eines Kontozugangsberechtigten neu angelegt werden soll. Dies kann beispielsweise nötig werden, wenn der Kontozugangsberechtigte aufgrund eines Unfalls oder einer Krankheit nicht in der Lage ist, über eine Tastatur eine Tippprobe abzugeben, in ausreichender Weise mit dem angelegtem Tippprofil übereinstimmt, beispielsweise wenn er eine Fingerverletzung oder dergleichen hat.

Übergangsweise kann der Veranlasser, wenn er sich verletzt hat oder beispielsweise keinen Zugriff zu einer Datenverarbeitungseinheit mit Tastatur zur Verfügung hat, anstelle des Tippprofils eine Aufforderung an den Provider erstellen, dass er dieses Mal eine herkömmliche PIN und/oder eine herkömmliche TAN oder mTAN oder smartTAN zur Autorisierung einsetzen möchte. Diese Möglichkeit sollte jedoch auf eine minimale Anzahl an Autorisierungsvorgängen beschränkt sein.

Das erfindungsgemäße Verfahren enthält vorteilhafterweise auch einen Schritt, gemäß dem bei Abgabe einer Tippprobe durch einen Veranlasser, der der Kontozugangsberechtigte ist, jedes hinterlegte persönliche Tippprofil adaptiv angepasst wird. Der Provider ist dazu in der Lage, das hinterlegte Tippprofil und die Tippprobe miteinander zu verrechnen und eine neue Tippprobe herzustellen und anstelle des bisherigen Tippprofils zu hinterlegen. Damit ist es möglich, das Tippverhalten, das sich beispielsweise durch häufiges Eintippen von Ziffern in Worten verändert, anzupassen, um dem Veranlasser beziehungsweise dem Kontozugangsberechtigten zu gewährleisten, dass er selbst immer Zugang zu seinem Konto und die Möglichkeit zu Onlinetransaktionen hat.

Die vorliegende Erfindung stellt zusammenfassend ein System und ein Verfahren zur Verfügung, das den Schutz von Bankangelegenheiten mittels PIN-TAN-Verfahren ergänzt oder ersetzt und einen wesentlich sichereren Umgang bei der Ausführung von Online-Bankgeschäften gewährleistet.

### BESCHREIBUNG DER FIGUREN

Nachfolgend wird die vorliegende Erfindung anhand von Figuren im Detail erläutert. Es zeigen:
- Figur 1: eine schematische Darstellung des erfindungsgemäßen Systems gemäß einem ersten Ausführungsbeispiel;
- Figur 2: eine schematische Darstellung eines erfindungsgemäßen Systems gemäß einem zweiten Ausführungsbeispiel;
- Figur 3: ein Flussdiagramm des erfindungsgemäßen Verfahrens;
- Figur 4: ein Flussdiagramm der vom Kontozugangsberechtigten durchzuführenden Schritte;
- Figur 5: eine Ansicht der Anzeigeeinheit beim Freigeben eines Zugangs zu einem Online-Kundenbankkonto; und
- Figur 6: eine Ansicht einer Anzeigeeinheit beim Durchführen einer Online-B anktrans aktion.

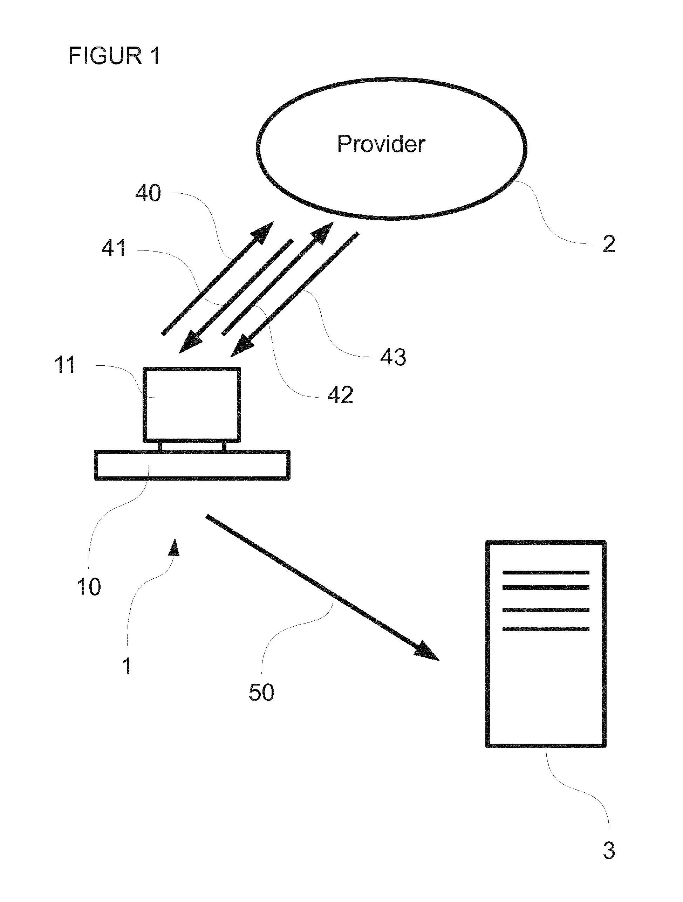

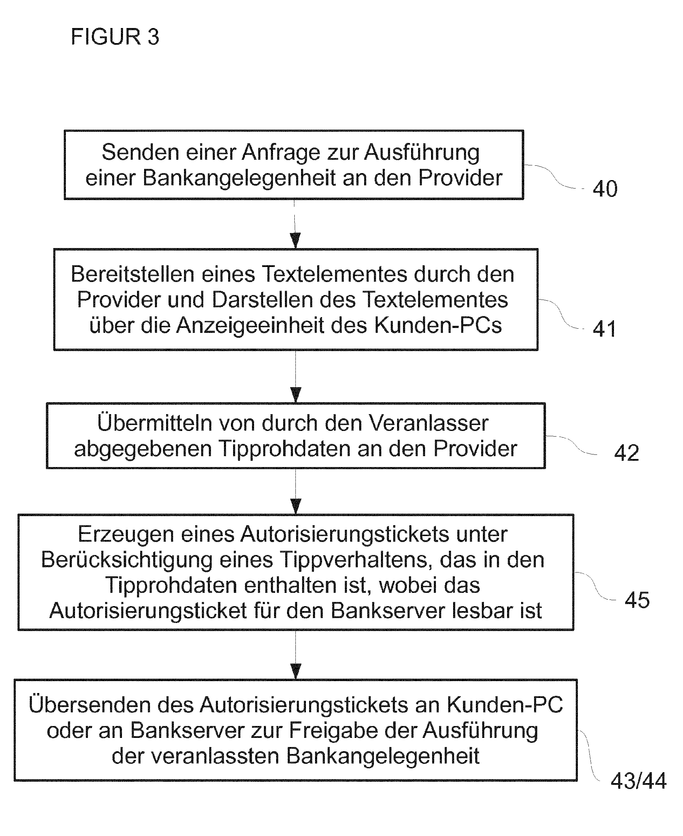

Figur 1 zeigt ein erfindungsgemäßes System zur sicheren Abwicklung von Online-Bankangelegenheiten, beispielsweise für eine sicheren Zugang zu einem Online-Kundenbankkonto, zur sicheren Ausführung von Online-Banktransaktionen und/oder zur sicheren Änderung von Einstellungen eines Kundenkontos. Das System enthält einen Kundencomputer 1 mit einer alphanumerischen Tastatur 10 und einem Monitor 11, einen Provider 2 und ein Bankserversystem 3. Der Kundencomputer 1 ist über das Internet mit dem Provider 2 sowie dem Bankserversystem 3 verbunden, wobei die Internetverbindung in Figur 1 nicht dargestellt ist. Die Pfeile 40, 41, 42 und 43 sowie 50 zeigen den Datenaustausch zwischen dem Kundencomputer und dem Provider 2 beziehungsweise dem Bankserversystem 3, wobei diese den in Figur 3 erläuterten Verfahrensschritten entsprechen.

Für eine sichere Abwicklung von Online-Bankangelegenheiten übermittelt ein Benutzer vom Kundencomputer 1 einen Befehl an einen Provider 2, dass er eine Online-Bankangelegenheit ausführen möchte (Schritt 40). Dieser Befehl kann ein Login-Passwort oder Angaben zu einer Onlineüberweisung oder dergleichen enthalten. Als Antwort darauf übermittelt der Provider 2 an den Kundencomputer 1 Daten mit einer Aufforderung, ein bestimmtes Textelement abzutippen, wobei die Aufforderung durch den Monitor 11 angezeigt wird (Schritt 41). Sobald der Veranlasser einer Bankangelegenheit, der der Kontozugangsberechtigte sein sollte, das Textelement über die Tastatur 10 eingegeben hat, wird ein das individuelle Tippverhalten des Veranlassers enthaltender alphanumerischer String an den Provider 2 übermittelt (Schritt 42). Der Provider 2 vergleicht den alphanumerischen String, der als Tippprobe dient, mit einem hinterlegten persönlichen Tippprofil des Kontenzugangsberechtigten und übermittelt bei ausreichender Übereinstimmung eine Autorisierung oder bei mangelnder Übereinstimmung ein Ablehnung zur Ausführung der gewünschten Bankangelegenheiten (Schritt 43). Hat der Provider 2 eine Autorisierung übermittelt, so wird die Bankangelegenheit zwischen Kundencomputer 1 und Bankserversystem 3 (Pfeil 50) zugelassen, wobei vorzugsweise ein vom Provider 2 erstelltes Autorisierungsticket mit der durchzuführenden Bankangelegenheit gekoppelt ist.

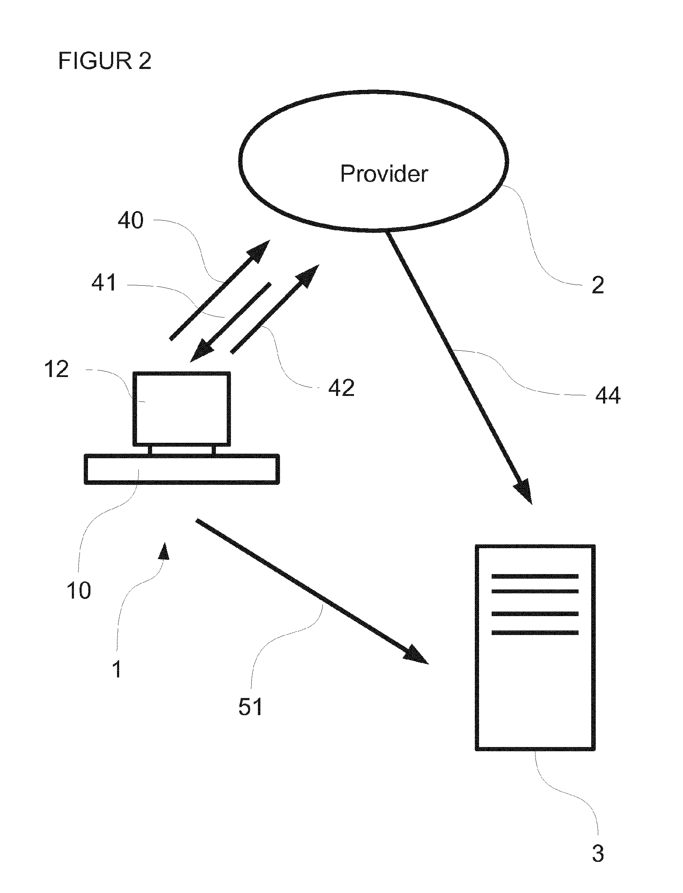

Figur 2 zeigt einen ähnlichen Aufbau wie Figur 1. Jedoch wird gemäß dem zweiten Ausführungsbeispiel das vom Provider 2 ausgestellte Autorisierungsticket, im Falle dass die Tippprobe und das Tippprofil weitgehend übereinstimmen, direkt an das Bankserversystem 3 übermittelt (Pfeil 44), während der Kundencomputer 1 den Befehl zur Abwicklung von Online-Bankangelegenheiten, wie durch Pfeil 51 dargestellt, an das Bankserversystem 3 sendet und das Bankserversystem 3 feststellt, ob es die Abwicklung der gewünschten Bankangelegenheit durchführt.

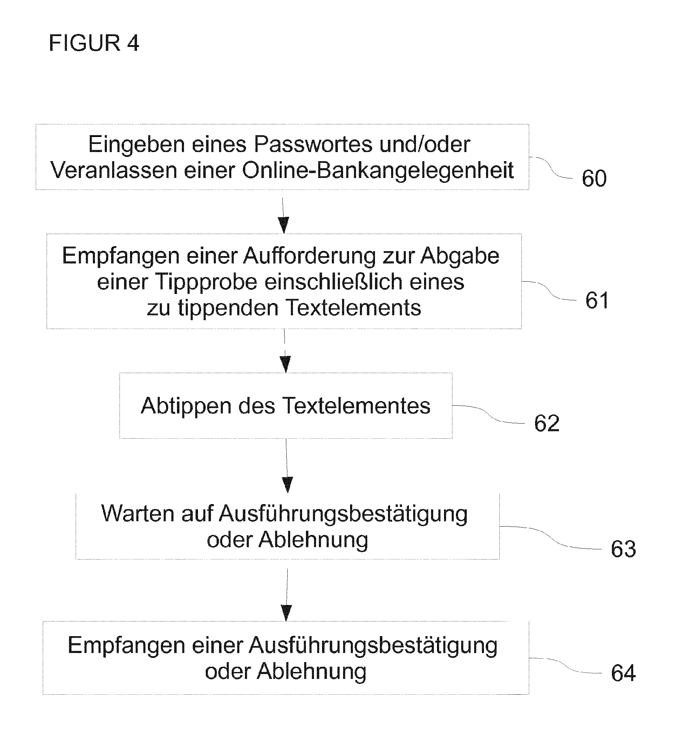

Zur Durchführung des erfindungsgemäßen Verfahrens muss ein Veranlasser eine Online-Bankangelegenheit, wie in Figur 4 gezeigt, zunächst ein Passwort und/oder einen Befehl erstellen, dass er eine Online-Bankangelegenheit abzuwickeln wünscht (Schritt 50). Als Antwort auf seine Eingabe in Schritt 50 empfängt der Veranlasser eine Aufforderung zur Abgabe einer Tippprobe, wobei dem Veranlasser vorzugsweise der abzutippende Text angezeigt wird (Schritt 51).

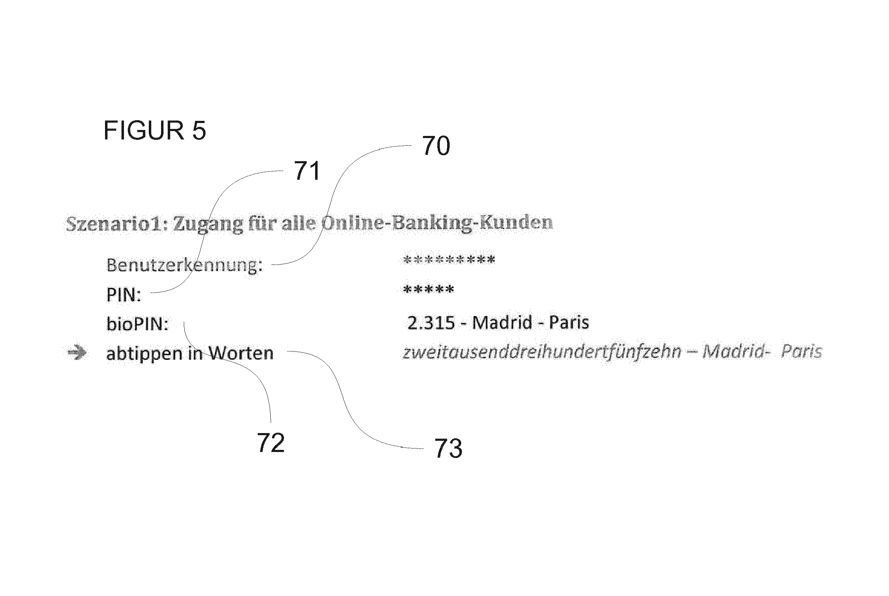

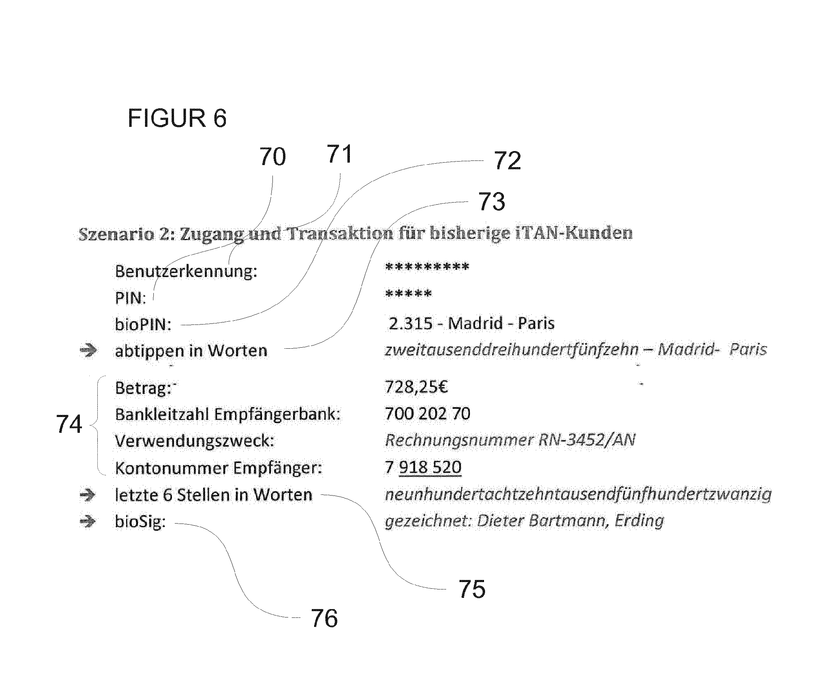

In den Figuren 5 und 6 ist eine solche Aufforderung dargestellt. So kann es zum Beispiel für den Zugang zu einem Online-Kundenbankkonto notwendig sein, eine Benutzerkennung 70 und eine PIN 71 einzugeben. Zudem zeigt der Monitor eine bioPIN 72 die vorteilhafterweise aus Wörtern und Ziffern besteht sowie die Aufforderung 73, die bioPIN 72 in Worten abzutippen.

Ähnlich ist der Vorgang, um Zugang zu einem Online-Kundenbankkonto zu erhalten und anschließend eine Transaktion auszuführen. Dazu ist es notwendig, die Benutzerkennung 70 und die PIN 71 einzugeben, die bioPIN 72 in Worten abzutippen und Angaben zum Überweisungsgegenstand, d. h. Betrag, Bankleitzahl und Kontonummer des Empfängers, zu machen. Anschließend wird noch eine bioTAN 75 sowie eine bioSIG 76 eingegeben werden. Unter der bioTAN ist im Fall der Figur 6 zu verstehen, dass die letzten sechs Stellen der Kontonummer des Empfängers in Worten ausgeschrieben eingetippt werden. Unter der bioSIG ist die Eingabe des Namens des Kontozugangsberechtigten sowie der Ort, die eingetippt werden, zu verstehen.

Wie in Figur 4 gezeigt, wird der Veranlasser einer Bankangelegenheit nach dem Abtippen des Textelements beziehungsweise der Textelemente (bioPIN 73, bioTAN 75 und bioSIG 76) aufgefordert, auf eine Ausführungsbestätigung oder Ablehnung zu warten (Schritt 53), die wie oben beschrieben durch den Provider erstellt wird. Zuletzt erhält der Veranlasser eine Ausführungsbestätigung oder Ablehnung (Schritt 54).

Nachfolgend werden noch einige Einzelheiten zu dem erfindungsgemäßen Verfahren und vor allem zu den in den Figuren 5 und 6 gezeigten Anzeigeansichten, erklärt, die lediglich als Beispiele zu verstehen sind. Um Zugang zu einem Online-Kundenbankkonto herzustellen, präsentiert die Bank, insbesondere durch den Provider 2 am Monitor 11 des Kundencomputers 1, jedes Mal eine andere vierstellige Zahl und andere Städtenamen als bioPIN 72. Der Bediener des Kundencomputers 1, der der Kontoberechtigte sein sollte, tippt die Zahl in Worten sowie die Städtenamen in ein Eingabefeld ein. Der das Tippverhalten des Nutzers enthaltende alphanumerischer String wird als biometrische Einmal-PIN (bioPIN) verwendet. Sollte der Kundencomputer 1 Ziel eines Angriffs aus dem Internet sein, so kann der Angreifer zwar die Einmal-PIN lesen, ist aber nicht in der Lage, diese mit dem geeignetem Tippverhalten zu reproduzieren, sodass ihm der Zugang zum Online-Kundenbankkonto verwährt bleibt. Die Kombination aus einem herkömmlichen PIN 71 und einer bioPIN 73 zur Berechtigung des Kontozugangsberechtigten zu seinem Online-Kundenbankkonto schafft einen sehr starken 2-Faktor-Zugangsschutz mit dem zusätzlichen Nutzen, dass das Abphischen der Einmal-PIN kein Nutzen für den Angreifer darstellt.

Der Kunde bzw. Kontozugangsberechtigte tippt in Worten die letzten sechs Ziffern der Nummer des Empfängerkontos als Zahl ein, die sogenannte bioTAN 75. Manipuliert der Angreifer diese Zahl, d.h. die Empfängerkontonummer, muss er das auch in Worten. Da er das Tippverhalten des Kunden nicht reproduzieren kann, wird der Angriff entdeckt. Es ist zu beachten, dass die bioTAN 75 mehr Stellen aufweisen sollte als die bioPIN 73. Ansonsten wäre folgendes Angreifermodell denkbar: Der Benutzer gibt die bioPIN 73 ein. Dann schiebt sich der Angreifer in den Dialog ein und sagt, es ist ein Verarbeitungsfehler aufgetreten. Deshalb muss eine neue bioPIN eingegeben werden. In Wirklichkeit präsentiert der Angreifer seine Kontonummer, die er dann als bioTAN benutzt. Hat die bioTAN 75 mehr Stellen als die bioPIN 73, läuft dieser Angriff bei einem aufmerksamen Benutzer ins Leere.

Man kann die Sicherheit skalieren und passend auf die Kundengruppe oder auf die Transaktionshöhe zuschneiden. So kann man bei Kleinbeträgen auf Manipulationsschutz verzichten oder ihn nur dann verlangen, wenn der Bank die Überweisung verdächtig vorkommt, weil sie aus dem Rahmen fällt oder der Betrag sehr hoch ist.

Da die TAN als Schutzmechanismus nicht mehr genügt, ist es nur konsequent, sie abzuschaffen. An ihre Stelle kann die biometrische Signatur (bioSIG 76) treten. Der Benutzer tippt als Unterschriftszeile beispielsweise den Text: *gezeichnet: Vorname Nachname, Ort.* Dieser alphanumerischer String trägt das Tippverhalten des Kunden, so dass der alphanumerischer String als Willensbekundung nicht abstreitbar ist. Da er den Charakter einer Unterschrift besitzt, wird er dem eigentlichen Sinn der TAN gerecht. Die biometrische Signatur 76 kann als das direkte Analogon zur handschriftlichen Unterschrift verstanden werden. Für den Kunden stellt das eine beträchtliche Erleichterung dar, da er keine TAN-Listen mehr mitführen und sicher aufzubewahren muss. Das Tippen der Unterschriftszeile geht ihm auch müheloser von der Hand als das Abtippen einer sechsstelligen Zahl mit anschließendem Korrekturlesen, zumal Tippfehler akzeptiert werden. Außerdem ist die Sicherheit höher als bei der iTAN, denn jetzt weiß man, wer die bioSIG getippt hat, während man das bei der iTAN nicht weiß. Als Zusatznutzen verhindert die bioSIG 76 die Umgehung des Vier-Augen-Prinzips bei wichtigen Firmenüberweisungen. Dies erhöht die Compliance-Konformität.

Als weiterer Sicherheitsgewinn erschwert die bioSIG 76 deutlich, dass dem Kunden vom Angreifer eine Transaktion untergeschoben wird an einer Stelle an der er keine ausführen wollte, z.B. nach dem Login. Die bioSIG 76 ist nämlich mit einem Replay-Schutz ausgestattet, so dass sie nach ihrer Verwendung sofort ihre Gültigkeit verliert und man sie kein zweites Mal verwenden kann. Manipulationen können dadurch schnell erkannt.

Zusammenfassend bietet das erfindungsgemäße System sowie Verfahren zur sicheren Abwicklungen von Online-Bankangelegenheiten nicht nur einen effektiven Schutz gegen Hackerangriffe, sondern ist auch kostengünstig und einfach realisierbar.

## Patentansprüche

1. System zur sicheren Abwicklung von Online-Handlungen, insbesondere Online-Bankangelegenheiten, vorzugsweise für einen sicheren Zugang zu einem Online-Kundenbankkonto und/oder zur sicheren Ausführung von Online-Banktransaktionen, wobei das System umfasst:
ein Serversystem, insbesondere ein Bankserversystem,
einen Provider, und
mindestens eine internetfähige Datenverarbeitungseinheit, die zumindest eine Tastatur und eine Anzeigeeinheit, insbesondere ein Display, aufweist,
wobei die mindestens eine Datenverarbeitungseinheit über das Internet sowohl mit dem Provider als auch mit dem Serversystem verbunden ist,
**dadurch gekennzeichnet, dass**
auf dem Provider eine Vielzahl an persönlichen Tippprofilen hinterlegt ist, wobei jedem einer Vielzahl an registrierten Nutzern, insbesondere Online-Bankkunden jeweils eines der persönlichen Tippprofile zugeordnet ist, und dass
der Provider derart ausgebildet ist, dass
er einen Veranlasser einer Online-Handlung vor Ausführung einer durch diesen veranlassten Bankangelegenheit über die Datenverarbeitungseinheit zur Abgabe einer Tippprobe auffordert, wobei er dem Veranlasser insbesondere ein Textelement bereitstellt, wobei durch Abtippen dieses Textelementes über die Tastatur der Datenverarbeitungseinheit die Tippprobe erzeugbar ist, und/oder dass der Provider derart ausgebildet ist, dass ein Veranlasser bei Ausführung der Online-Handlung durch Eingabe eines mit der Online-Handlung und/oder dem Veranlasser eindeutig zuordenbaren Textelements eine Tippprobe erzeugen kann, welche dem Provider bereitgestellt werden kann,
wobei der Provider weiterhin so ausgebildet ist, dass er die vom Veranlasser abgegebene Tippprobe in Form eines ein individuelles Tippverhalten des Veranlassers enthaltenden alphanumerischer Strings analysiert und mit dem dem Nutzer zugeordneten persönlichen Tippprofil vergleicht und
bei weitgehender Übereinstimmung der Tippprobe mit dem Tippprofil die Abwicklung der veranlassten Bankangelegenheit autorisiert.

2. System nach dem vorhergehenden Anspruch,
**dadurch gekennzeichnet, dass**
das System eine Passwortdatei mit einer Mehrzahl von darin hinterlegten Passwörtern für verschiedene Applikationen sowie ein Datenverarbeitungsprogramm aufweist, welches jeder Applikationen ein erforderliches Passwort bereitstellt nachdem die Passwortdatei durch den Provider nach Eingabe einer Tippprobe geöffnet worden ist.

3. System nach einem der vorhergehenden Ansprüche,
**dadurch gekennzeichnet, dass**
der Provider derart gestaltet ist, dass er zur Autorisierung ein Autorisierungsticket, das insbesondere vom Bankserversystem auslesbar ist, erstellt und dem Serversystem zur Verfügung stellt, wobei das Autorisierungsticket insbesondere an eine bestimmte durch den Veranlasser initiierte Online-Handlung und/oder die Person des Veranlassers oder Nutzers gebunden ist.

4. System nach einem der vorhergehenden Ansprüche,
**dadurch gekennzeichnet, dass**
der Provider zur Registrierung von neu zu registrierenden Nutzern, insbesondere Online-Bankkunden ausgelegt ist, wobei die Registrierung insbesondere das Erstellen eines persönlichen Tippprofils für den neu zu registrierenden Nutzer, insbesondere Online-Bankkunden und das anschließende Hinterlegen dieses neu erstellten persönlichen Tippprofils betrifft.

5. System nach einem der vorhergehenden Ansprüche,
**dadurch gekennzeichnet, dass**
jedes hinterlegte persönliche Tippprofil bei Abgabe einer Tippprobe durch einen Veranlasser, dessen Tippprobe mit dem hinterlegten Tippprofil des Nutzers weitgehend übereinstimmt, adaptiv durch den Provider anpassbar ist.

6. Verfahren zur sicheren Abwicklung von Online-Handlungen, insbesondere Online-Bankangelegenheiten, vorzugsweise für einen sicheren Zugang zu einem Online-Kundenbankkonto und/oder zur sicheren Ausführung von Online-Banktransaktionen,
**dadurch gekennzeichnet, dass**
ein Veranlasser vor Ausführung einer durch diesen veranlassten Online-Handlung, insbesondere einer Bankangelegenheit zur Abgabe einer Tippprobe aufgefordert wird, wobei dem Veranlasser insbesondere ein Textelement zur Verfügung gestellt wird, wobei durch Abtippen dieses Textelementes über eine Tastatur die Tippprobe erzeugt wird, und/oder dass ein Veranlasser bei Ausführung der Handlung durch Eingabe eines mit der Online-Handlung und/oder dem Veranlasser eindeutig zuordenbaren Textelements eine Tippprobe erzeugt,
wobei eine von dem Veranlasser abgegebene Tippprobe in Form eines ein individuelles Tippverhalten des Veranlassers enthaltenden alphanumerischer Strings analysiert wird und mit einem dem Veranlasser zugeordneten persönlichen Tippprofil verglichen wird, und
bei weitgehender Übereinstimmung der Tippprobe mit dem Tippprofil die veranlasste Handlung autorisiert wird.

7. Verfahren nach einem der vorhergehenden Ansprüche,
**dadurch gekennzeichnet, dass**
das mit der Handlung und/oder dem Veranlasser eindeutig zuordenbare Textelement ein Teil eines bei der Online-Handlung zu übermittelnden Texts oder Personeninformationen des Veranlassers sind.

8. Verfahren nach einem der Ansprüche 6 bis 7,
**dadurch gekennzeichnet, dass**
das Verfahren mittels eines Systems nach einem der Ansprüche 1 bis 5 durchgeführt wird.

9. Verfahren nach einem der Ansprüche 6 bis 8,
**dadurch gekennzeichnet, dass**
der Provider zur Autorisierung der veranlassten Online -Handlung ein Autorisierungsticket, das insbesondere vom Serversystem auslesbar ist, erzeugt und dem Serversystem übermittelt, wobei das Autorisierungsticket insbesondere an die veranlasste Online-Handlung und/oder den Nutzer gebunden ist.

10. Verfahren nach einem der Ansprüche 6 bis 9,
**dadurch gekennzeichnet, dass**
die vom Veranlasser abgegebene Tippprobe in Form eines ein individuelles Tippverhalten des Veranlassers enthaltenden alphanumerischer Strings von der Datenverarbeitungseinheit so an den Provider übermittelt wird, dass dieser das Tippverhalten des Veranlassers erkennen kann.

11. Verfahren nach einem der Ansprüche 6 bis 10,
**dadurch gekennzeichnet, dass**
der Provider den Veranlasser zusätzlich zur Abgabe einer Tippprobe zur Eingabe eines Passwortes auffordert.

12. Verfahren nach einem der Ansprüche 6 bis 11,
**dadurch gekennzeichnet, dass**
der Provider den Veranlasser vor Freigabe zur Ausführung jeder veranlassten Online-Handlung mindestens zur Abgabe einer, vorzugsweise von zwei oder mehr, Tippproben auffordert oder das Vorliegen mindestens einer Tippprobe überprüft.

13. Verfahren nach einem der fünf vorhergehenden Ansprüche,
**dadurch gekennzeichnet, dass**
das Textelement alphanumerische Zeichen einschließlich Ziffern, Buchstaben, Sonderzeichen und/oder ganze Wörter enthält, wobei zur Abgabe der Tippprobe die Ziffern vom Veranlasser insbesondere in Worten ausgeschrieben werden.

14. Verfahren nach einem der Ansprüche 6 bis 13,
**dadurch gekennzeichnet, dass**
der Provider zur Registrierung von neu zu registrierenden Nutzern, insbesondere Online-Bankkunden diese zur Abgabe einer Tippprobe über die Datenverarbeitungseinheit auffordert, wobei dem neu zu registrierenden Nutzer, insbesondere Online-Bankkunden ein vorzugsweise zufällig gewähltes Textelement bereitgestellt wird und wobei durch Abtippen dieses Textelementes über die Tastatur der Datenverarbeitungseinheit die Tippprobe erzeugt wird, und
dass aus einer abgegebenen, von der Datenverarbeitungseinheit an den Provider übermittelten Tippprobe ein dem neu zu registrierenden Nutzer, insbesondere Online-Bankkunden zugeordnetes Tippprofil erstellt und anschließend hinterlegt wird.

15. Verfahren nach einem der acht vorhergehenden Ansprüche,
**dadurch gekennzeichnet, dass**
jedes hinterlegte persönliche Tippprofil bei Abgabe einer Tippprobe durch einen Veranlasser, der gleichzeitig auch Nutzer ist, adaptiv angepasst wird.
